# EUROPEAN PATENT APPLICATION

(11) **EP 3 324 308 A1**
(43) Date of publication of application: **23.05.2018**
(21) Application number: 17188200.4
(22) Date of filing: 28.08.2017
(51) Int. Cl.: G06F 17/30

(54) **RETRIEVING APPARATUS, DISPLAY DEVICE AND RETRIEIVING METHOD**

(30) Priority: 18.11.2016 JP 2016225526
(71) Applicant: KABUSHIKI KAISHA TOSHIBA, Minato-ku Tokyo 105-8001 (JP)
(72) Inventor: YAMAJI, Yuto, Tokyo, 105-8001 (JP); SHIBATA, Tomoyuki, Japan, 105-8001 (JP)
(74) Representative: Moreland, David

(57) **Abstract**

According to an arrangement, a retrieving apparatus (20) includes a query obtaining unit (214), an evaluation method determining unit (215), and an evaluation unit (216). The query obtaining unit (214) is configured to obtain a first query including a relative expression. The evaluation method determining unit (215) is configured to determine an evaluation method for retrieval targets according to the first query. The evaluation unit (216) is configured to evaluate the retrieval targets with the determined evaluation method.

## Description

### FIELD

The present disclosure relates to a retrieving apparatus, a display device and a retrieving method.

### BACKGROUND

A person retrieving system that uses clothing and behaviors for retrieval is sometimes required to accept an input of a query of a difference from others. Among people in a spot, a person is retrieved with a feature on clothing and a behavior different from others. For example, in a place where people wearing suit come and go, retrieval is performed with a query of "a person wearing casual clothing." However, conventionally, there has been no mechanism that ensures retrieval with a query of the difference from others while providing a degree of freedom on a retrieval input.

### BRIEF DESCRIPTION OF THE DRAWINGS

FIG. 1 is a diagram illustrating a configuration of a retrieving system of a first arrangement;
FIG. 2 is a diagram illustrating a configuration of hardware of a retrieving apparatus of the first arrangement;
FIG. 3 is a diagram illustrating functions included in the retrieving apparatus of the first arrangement;
FIGS. 4A and 4B are diagrams for describing feature quantities extracted by an extractor of the first arrangement;
FIG. 5 is a diagram illustrating an attribution table of the first arrangement;
FIG. 6 is a diagram illustrating a behavior table of the first arrangement;
FIG. 7 is a diagram illustrating an attribution/behavior content table of the first arrangement;
FIG. 8 is a diagram illustrating an evaluation axis table of the first arrangement;
FIG. 9 is a diagram illustrating a relation between superordinate concepts and subordinate concepts of attributions of the first arrangement;
FIG. 10 is a diagram illustrating a keyword conversion table of the first arrangement;
FIG. 11 is a diagram illustrating analysis and conversion results of a first query in the first arrangement;
FIG. 12 is a diagram illustrating an exemplary display of an evaluation result in the first arrangement;
FIG. 13 is a diagram illustrating an exemplary display of an evaluation result in the first arrangement;
FIG. 14 is a diagram illustrating an exemplary display of an evaluation result in the first arrangement;
FIG. 15 is a diagram illustrating an exemplary display of an evaluation result in the first arrangement;
FIG. 16 is a diagram illustrating an attribution table of a third arrangement;
FIG. 17 is a diagram illustrating an attribution/behavior content table of the third arrangement;
FIG. 18 is a diagram illustrating a keyword conversion table of the third arrangement;
FIG. 19 is a diagram illustrating an attribution table of a fourth arrangement;
FIG. 20 is a diagram illustrating a behavior table of the fourth arrangement;
FIG. 21 is a diagram illustrating an attribution/behavior content table of the fourth arrangement;
FIG. 22 is a diagram illustrating an evaluation axis table of the fourth arrangement; and
FIG. 23 is a diagram illustrating a keyword conversion table of the fourth arrangement.

### DETAILED DESCRIPTION

According to an arrangement, a retrieving apparatus includes a query obtaining unit, an evaluation method determining unit, and an evaluation unit. The query obtaining unit is configured to obtain a first query including a relative expression. The evaluation method determining unit is configured to determine an evaluation method for retrieval targets according to the first query. The evaluation unit is configured to evaluate the retrieval targets with the determined evaluation method.

The following describes arrangements of a retrieving apparatus, a display device, and a retrieving method according to arrangements in detail by referring to the attached drawings.

### First Arrangement

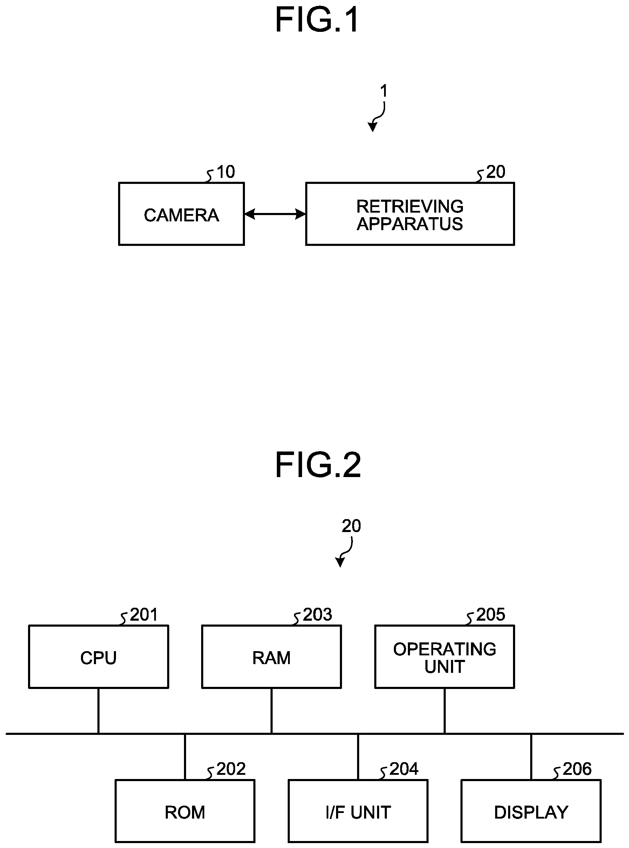

FIG. 1 is a diagram illustrating an exemplary schematic configuration of a retrieving system 1 of the arrangement. As illustrated in FIG. 1, the retrieving system 1 includes a camera 10 and a retrieving apparatus 20. While the number of the camera 10 included in the retrieving system 1 is one in the example in FIG. 1, not limiting to this, a configuration that includes a plurality of the cameras 10 may be employed. The camera 10 and the retrieving apparatus 20 are coupled to one another by wireless or wired. A combination of the camera 10 and the retrieving apparatus 20 may be considered as "a retrieving apparatus."

While this arrangement describes an example in a case where persons included in an image taken by the camera 10 are retrieval targets, the retrieval targets are not limited to a person as described in other arrangements below. The retrieving apparatus 20 detects person regions (regions that include persons) in a group of images taken by the camera 10, divides the person regions into regions of clothing, accessories, and parts of each person, and subsequently, recognizes attributions of the respective regions, thus performing statistical processing with the attributions of the respective regions as feature quantities. The retrieving apparatus 20 accepts inputs of queries, analyzes the accepted queries, and determines an evaluation method for the retrieval targets (in this example, persons). In the evaluation method, when a query belongs to an individual (a query including an absolute expression), a higher evaluation value is given to a retrieval target as the retrieval target has a feature quantity closer to a feature quantity corresponding to the query, and when a query describes a difference from others (a query including a relative expression), a higher evaluation value is given to a retrieval target as the retrieval target has a feature quantity further from a reference value (for example, average value) of statistical data on a feature quantity corresponding to the query. That is, in this arrangement, when a query that describes a difference from others (a query including a relative expression) is accepted, an evaluation parameter for evaluating the retrieval targets (statistical data of feature quantities regarding attributions and behaviors) is determined (variably determined) according to the query. Then, an evaluation is performed based on the determined statistical data to output an evaluation result (output a response to the query). The following describes specific contents of the retrieving apparatus 20.

FIG. 2 is a diagram illustrating an exemplary hardware configuration of the retrieving apparatus 20. As illustrated in FIG. 2, the retrieving apparatus 20 includes a CPU 201, a ROM 202, a RAM 203, an I/F unit 204, an operating unit 205, and a display 206.

The CPU 201 integrally controls operations of the retrieving apparatus 20. The CPU 201 uses predetermined regions of the RAM 203 as work areas to execute various control programs stored in the ROM 202, so as to achieve various functions of the retrieving apparatus 20. Specific contents of the functions of the retrieving apparatus 20 will be described later.

The ROM 202 is a non-volatile memory (non-rewritable memory) that stores programs, various settings information, and the like relating to the retrieving apparatus 20.

The RAM 203 is a storage unit, for example, a SDRAM, and functions as the work area of the CPU 201 having a role as a buffer or the like.

The I/F unit 204 is an interface to be coupled to an external device as the camera 10 or the like. The operating unit 205 is a device for accepting operations by a user, and includes a computer mouse, a keyboard, and the like. The display 206 is a device for indicating various kinds of information on the retrieving apparatus 20, and includes a liquid crystal display and the like. A configuration that integrally includes the operating unit 205 and the display 206 (for example, configured as a touchscreen) may be employed.

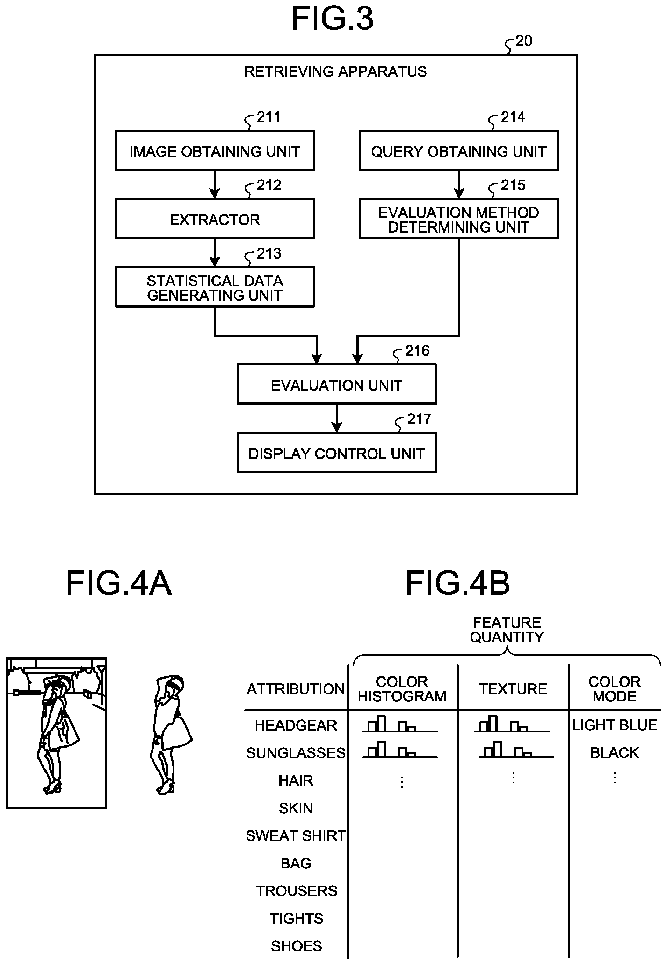

FIG. 3 is a diagram illustrating exemplary functions of the retrieving apparatus 20. As illustrated in FIG. 3, the retrieving apparatus 20 includes an image obtaining unit 211, an extractor 212, a statistical data generating unit 213, a query obtaining unit 214, an evaluation method determining unit 215, an evaluation unit 216, and a display control unit 217. While the example in FIG. 3 mainly indicates functions relating to this arrangement, functions of the retrieving apparatus 20 are not limited to them. While, in this arrangement, the functions of each of the image obtaining unit 211, the extractor 212, the statistical data generating unit 213, the query obtaining unit 214, the evaluation method determining unit 215, the evaluation unit 216, and the display control unit 217 are achieved when the CPU 201 executes the programs stored in the ROM 202 or the like, not limiting to this, for example, at least a part of the functions may be achieved by a dedicated hardware circuit (a semiconductor integrated circuit or the like). A part of or a whole of the retrieving apparatus 20 may be configured to exist on a server.

The image obtaining unit 211 obtains the images taken by the camera 10. In this example, the image obtaining unit 211 obtains a plurality of temporally continuous images.

The extractor 212 uses the images obtained by the image obtaining unit 211 to extract the feature quantities regarding the attribution or the behavior for each retrieval target. In this arrangement, the extractor 212 extracts the feature quantities regarding the attribution or the behavior by each person included in the images obtained by the image obtaining unit 211. In this example, the extractor 212 detects the person regions in the images obtained by the image obtaining unit 211, separates the detected person regions into the clothing, the accessories, and the parts, and outputs the feature quantities by each separated region. The extractor 212 is also configured to recognize person behaviors in the sequential person regions and output as the feature quantities.

The following describes specific contents of processes by the extractor 212. First, the extractor 212 detects persons in the images obtained by the image obtaining unit 211. Any method for detecting the persons is employed, and for example, a method disclosed in Non-patent Document "T. Watanabe et al.: Co-occurrence histograms of oriented gradients for pedestrian detection, 2009." may be used for the detection. However, not limiting to this, various known techniques are available. Usually, a person is captured in a plurality of the images obtained sequentially, and is captured in a plurality of appearances. Analyzing the information on the plurality of appearances ensures an improvement of retrieval performance. Associating images of the same person from the images taken sequentially achieves extracting the feature quantities from the plurality of the images. However, not limiting to this, a configuration may be employed such that the feature quantities of the person are extracted from one image. For associating the same person, for example, a method disclosed in Non-patent Document "V. Q. Pham et al.: DIET: Dynamic Integration of Extended Tracklets for Tracking Multiple Persons, 2014." may be employed. Another method that associates images (person regions) including the same person among images taken by each of a plurality of the cameras 10 may be employed (for example, see Non-patent Document "Ijiri, Yoshihisa, et al. "Person Re-identification Algorithms: A Survey," TECHNICAL REPORT OF IEICE., PRMU2011-21 (PRMU), 2011, 117-124." With these methods, images of a plurality of person regions of a person can be obtained in the images taken by single camera 10 and among the images taken by a plurality of the cameras 10.

The extractor 212 analyzes the attribution of the person included in the images among the images obtained by the image obtaining unit 211. The attribution of the person means a feature obtained from the images including the person and describing the person. For example, as information unique to the person, the attribution of the person means height, figure, gender, or age, while as the clothing, the attribution of the person means a type of the clothing such as a dress, a shirt, a skirt, and means a color and a texture (space frequency) of the clothing. For example, with a method disclosed in Non-patent Document "Yamaguchi, Kota, et al. "Parsing clothing in fashion photographs." Computer Vision and Pattern Recognition (CVPR), 2012 IEEE Conference on. IEEE, 2012," the person regions detected from the images can be separated into the clothing, the accessories, and the parts so as to be recognized. This ensures identifying the clothing, the parts, the figures, and the like of the persons detected from the images. When a face is included, there has been a method for estimating the gender and the age (for example, see Non-patent Document "Iga, Ryotatsu, et al. "A gender and age estimation system from face images." Age 25 (2003): 34."). When the images including the person are obtained sequentially, the behavior of the person can be recognized. For example, with a method disclosed in Non-patent Document "Cheron Guilhem, Ivan Laptev, and Cordelia Schmid. "P-CNN: Pose-based CNN features for action recognition." Proceedings of the IEEE International Conference on Computer Vision. 2015," the behavior of the person can be classified by using the sequential person images. Furthermore, positions of the person in the images provide a walking locus of the person. The feature quantities regarding the attributions and the behaviors are each saved. For example, the feature quantities of the person included in an image of FIG. 4A are analyzed so as to be FIG. 4B. Since the feature quantities regarding the attribution of the person do not vary in a certain period of time, the feature quantities obtained sequentially may be aggregated to be one feature quantity. A configuration may be employed such that an image for easily analyzing the attributions is selected and only the image is analyzed to obtain the feature quantities.

A description will be continued on FIG. 3. The statistical data generating unit 213 uses the feature quantities extracted by the extractor 212 to generate statistical data (typically, a histogram of the feature quantities) by each attribution or behavior. The statistical data is an evaluation parameter for evaluating the retrieval targets (in this example, the persons included in the image). First, the statistical data generating unit 213 obtains predetermined ranges of the feature quantities for statistical processing. The range means a time range and a space range. The time range indicates a past time period as a processing target, and the space range is specified with a unit such as in the images taken by the single camera 10 or among the images taken by every camera 10 installed in one facility. A part of the images taken by the camera 10 may be specified. In the statistical processing, average values and variance values of the feature quantities (contents of the attributions and the behaviors) corresponding to the attributions and the behaviors may be calculated by each attributions and behaviors, or average and variance may be used to perform normalization processing. Bins may be configured in certain units to perform histogram processing, and modes of the histograms may be calculated. Co-occurrence rates and correlations between the attributions and the behaviors may be calculated.

The query obtaining unit 214 obtains a first query that includes a relative expression. This arrangement will be described on the premise that the query obtaining unit 214 obtains the first query describing a difference from others. A case where a query relating to an individual (a second query) is obtained will be described below in other arrangements. The first query may describe, for example, "a tall person wearing a colorful T-shirt," "a person wearing unsuitable clothing for the occasion," "a person wearing casual clothing," "a fast-walking person," and the like.

The evaluation method determining unit 215 determines an evaluation method for the retrieval targets according to the first query obtained by the query obtaining unit 214. More specifically, the evaluation method determining unit 215 determines an evaluation parameter for evaluating the retrieval targets according to the first query. As described above, the evaluation parameter is the statistical data on the feature quantities regarding the attributions or the behaviors of the retrieval targets, and here, the statistical data generating unit 213 generates the statistical data based on the feature quantities of each of a plurality of the retrieval targets included in the images by each attribution or behavior of the retrieval targets. That is, a plurality of pieces of different statistical data (the evaluation parameters) for every attribution or behavior are generated. The statistical data generating unit 213 may be configured to generate the statistical data by predetermined attributions or behaviors, or may be configured to generate the statistical data (the evaluation parameters) determined by the evaluation method determining unit 215 according to requests from the evaluation method determining unit 215.

Here, the evaluation method determining unit 215 determines a way to give an evaluation value such that a higher evaluation value is given to a retrieval target obtain as a feature quantity of the retrieval target corresponding to the statistical data determined as the evaluation parameter is further from a reference axis of the statistical data. More specifically, the evaluation method determining unit 215 determines the evaluation parameter and the way to give the evaluation value corresponding to the first query (determines the evaluation method) based on corresponding information indicating a correspondence between a word, an attribution or a behavior, and a direction in which the evaluation value increases, and the first query. The following describes specific contents.

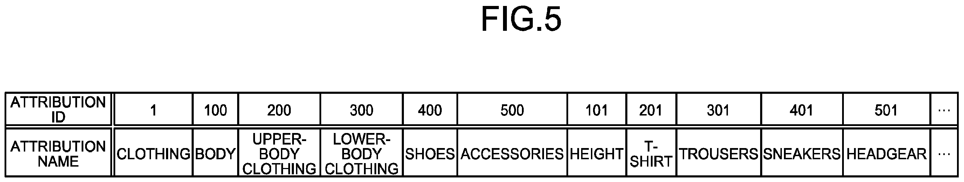

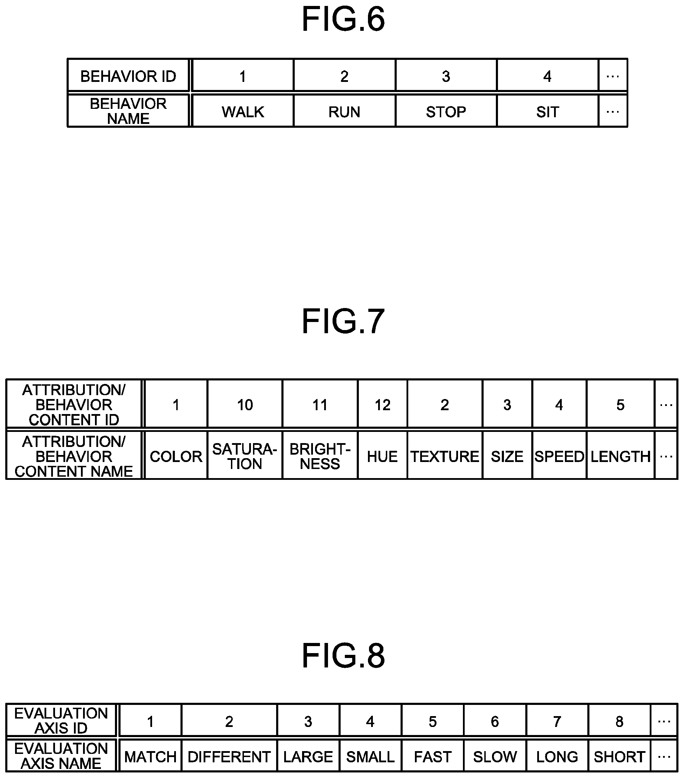

Here, the evaluation method determining unit 215 manages an attribution table illustrated in FIG. 5, a behavior table illustrated in FIG. 6, an attribution/behavior content table illustrated in FIG. 7, and an evaluation axis table illustrated in FIG. 8. These tables are stored anywhere, and may be stored in the retrieving apparatus 20, or may be stored in an external server or the like. The attribution table illustrated in FIG. 5 is information in a table format where attribution IDs for identifying names of the attributions are associated with respective names of the attributions. The behavior table illustrated in FIG. 6 is information in a table format where behavior IDs for identifying names of the behaviors are associated with respective names of the behaviors. The attribution/behavior content table illustrated in FIG. 7 is information in a table format where attribution/behavior content IDs for identifying attribution contents or behavior contents are associated with respective attribution contents or behavior contents. The evaluation axis table illustrated in FIG. 8 is information where evaluation axis IDs for identifying names of the evaluation axes are associated with respective names of the evaluation axes.

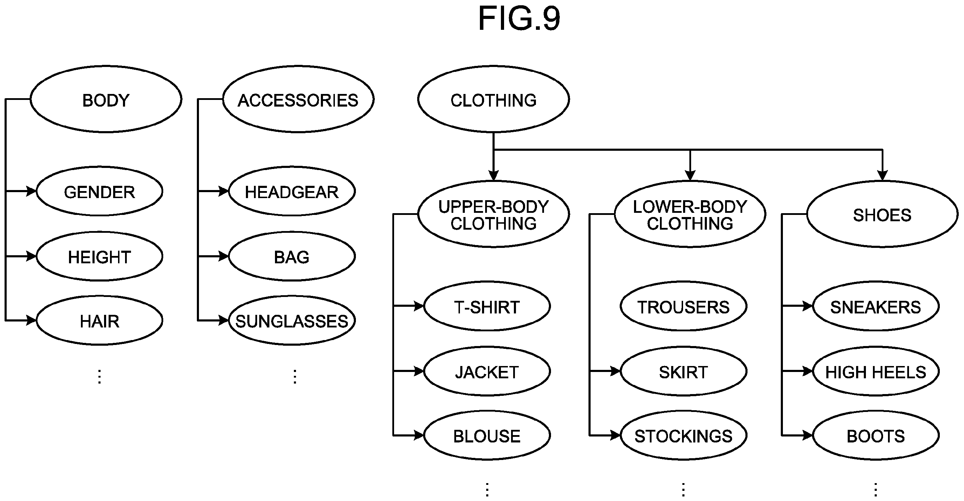

FIG. 9 is a diagram illustrating a relation between superordinate concepts and subordinate concepts of the attributions. For example, when an attribution of "clothing" is selected from the input query, all or a part of an upper-body clothing, a lower-body clothing, and shoes are selected, and each person region is divided into a plurality of regions according to the selection, thus the evaluation is performed by each divided region.

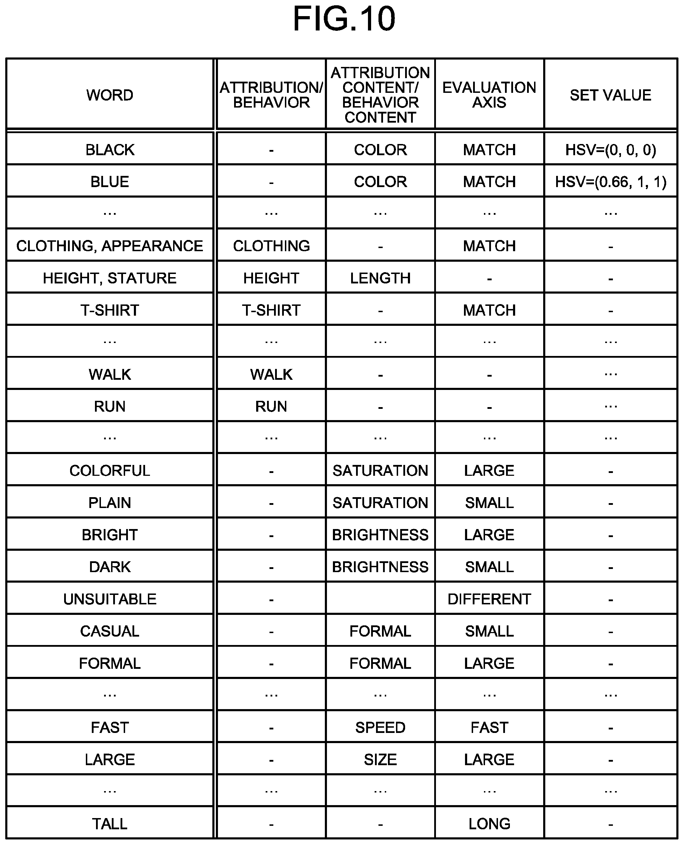

A description will be continued on the evaluation method determining unit 215. The evaluation method determining unit 215 analyzes dependencies of the first query obtained by the query obtaining unit 214, and subsequently, uses a keyword conversion table (an example of "corresponding information") illustrated in FIG. 10 to select an attribution/behavior, an attribution content/behavior content, an evaluation axis, and a set value for each of one or more words included in the first query. In FIG. 10, columns filled with "-" mean not to be set with corresponding words. Here, a dependency relation of the query is assumed to be one group, and the columns of "-" are filled to provide an analysis result of the query.

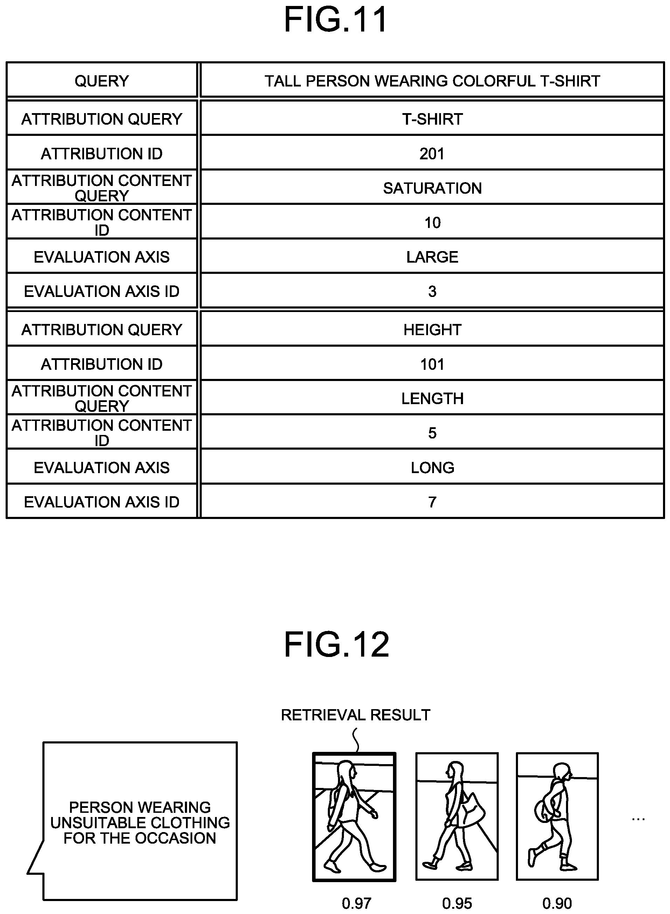

For example, the analysis and conversion result of the query of "a tall person wearing a colorful T-shirt" (the first query) is indicated in FIG. 11. For a partial query of "colorful T-shirt" (may be considered as the first query), the attribution of "T-shirt," the attribution content of "saturation," and the evaluation axis of "large" are selected. This means that the evaluation parameter corresponding to "colorful T-shirt" is determined to the statistical data (histogram) on the saturations of the T-shirts of the respective persons included in the images, and it is determined to give a higher evaluation value as the saturation is further from the reference axis (for example, the average value, the variance value, or a predetermined value may be employed) of the statistical data on the saturations of the T-shirts to higher. Similarly, for the partial query of "tall person," the attribution of "height," the attribution content of "length," and the evaluation axis of "long" are selected. This means that the evaluation parameter corresponding to "tall person" is determined to the statistical data (histogram) on the heights of the respective persons included in the images, and it is determined to give a higher evaluation value as the height is further from the reference axis of the statistical data on the heights to long (larger in height).

Similarly, for example, for the query of "a person wearing unsuitable clothing for the occasion," the attribution of "clothing," the attribution content of "none," and the evaluation axis of "different" are to be selected. Here, when the attribution content is "none," a histogram indicating an appearance frequency of the corresponding attribution is determined as the evaluation parameter. In this example, the evaluation method determining unit 215 determines a histogram indicating the appearance frequency by each of a plurality of the clothing (for example, the appearance frequency by each of the T-shirts and trousers) as the evaluation parameter corresponding to the query of "a person wearing unsuitable clothing for the occasion," and determines to give a higher evaluation value as the clothing has a lower frequency value compared with an average frequency value. In this case, it is considered that the average frequency value is the reference axis, and a person wearing clothing with the frequency value further from the reference axis is given the higher evaluation value.

Similarly, for example, for the query of "a person wearing casual clothing," the attribution of "clothing," the attribution content of "formal," and the evaluation axis of "small" are to be selected. This means that the evaluation parameter corresponding to "a person wearing casual clothing" is determined to the statistical data (histogram) on formal degrees (scales indicating degrees including the attributions such as "a suit," "a shirt," and "a tie" (degrees of formal)) of the respective persons included in the images, and it is determined to give a higher evaluation value as the formal degree is further from the reference axis of the statistical data on the formal degrees toward the smaller formal degree.

The same applies to the queries regarding the behaviors, and for the query of "a fast-walking person" for example, the behavior of "walk," the attribution content of "fast," and the evaluation axis of "fast" are to be selected. This means that the evaluation parameter corresponding to "a fast-walking person" is determined to the statistical data (histogram) on speeds of the respective persons included in the images, and it is determined to give a higher evaluation value as the speed is further from the reference axis of the statistical data on the speeds toward the faster speed (higher in the speed). Here, "fast-" of "fast-walking" is complemented to "fast" using an adjective relationship for analyzation.

A description will be continued on FIG. 3. The evaluation unit 216 evaluates the retrieval targets with the evaluation method determined by the evaluation method determining unit 215. More specifically, the evaluation unit 216 determines an evaluation value for each retrieval target based on a feature quantity of the retrieval target corresponding to an evaluation parameter, which is determined by the evaluation method determining unit 215, and the evaluation parameter, and the evaluation unit 216 determines at least the retrieval target that has a maximum evaluation value, as the evaluation result. For example, a configuration may be employed such that one or more retrieval targets whose evaluation values are equal to or more than a threshold value are determined.

For example, assume a case where the evaluation parameter is determined to the statistical data on the heights of the respective persons, and it is determined to give a higher evaluation value as the height is further from the reference axis of the statistical data on the heights towards a longer height (taller in height) (assume a case where such evaluation method is determined). In this case, the evaluation unit 216 determines the evaluation value based on the height of the person extracted by the extractor 212 and the statistical data on the heights generated by the statistical data generating unit 213 by each of the plurality of the persons included in the images. Specifically, a higher evaluation value is given to the target person as the height of person is further from the reference axis of the statistical data on the heights generated by the statistical data generating unit 213 toward a longer height (larger in height). When the evaluation method determining unit 215 has determined two or more evaluation parameters, the evaluation values of each of the plurality of the evaluation parameters may be simply added, or may be added with weighting or the like. For example, when the evaluation parameter is determined to a histogram indicating the appearance frequency by each of a plurality of the clothing, and it is determined to give a higher evaluation value as the clothing has a lower frequency value (when the query of "a person wearing unsuitable clothing for the occasion" is accepted), the evaluation value is determined for each clothing worn by each person, and the evaluation value for each person is determined by adding, adding with weighting, or the like of the evaluation values on the clothing.

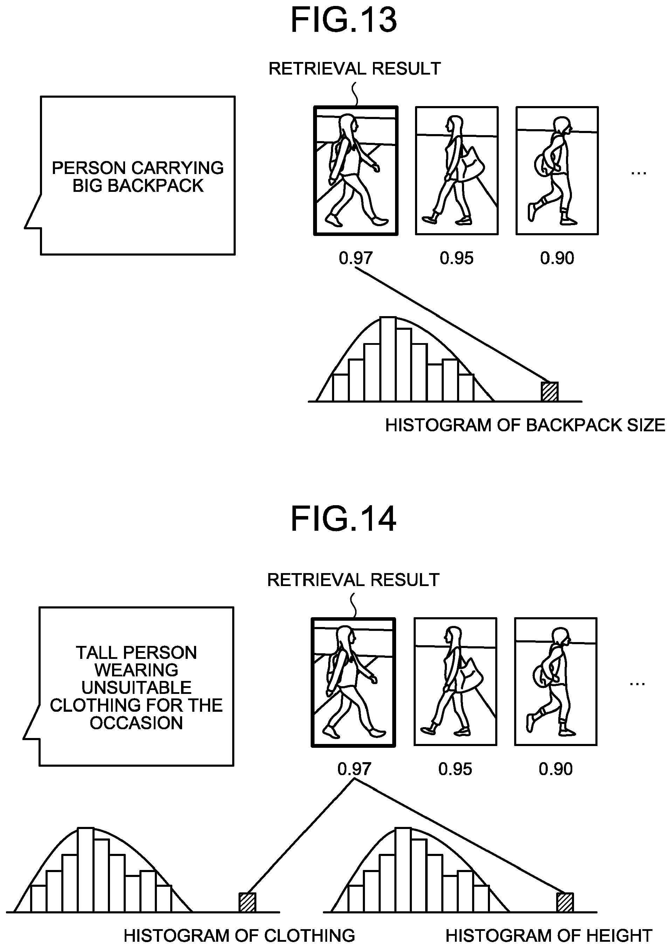

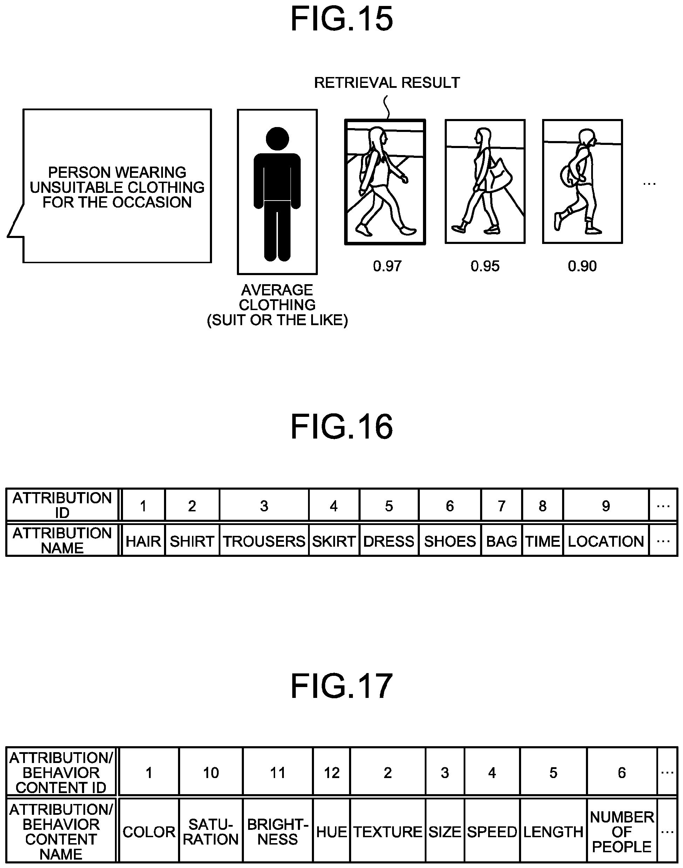

The display control unit 217 performs control to indicate the evaluation result by the evaluation unit 216. More specifically, the display control unit 217 performs control to indicate one or more persons determined by the evaluation unit 216 (indicate on the display 206 as the retrieval result). For example, as illustrated in FIG. 12, a configuration may be employed such that a person (a person determined by the evaluation unit 216) corresponding to the retrieval result among the plurality of the persons is highlighted (in the example of FIG. 12, indicated with the evaluation value) with the accepted query. For example, as illustrated in FIG. 13 and FIG. 14, a configuration may be employed such that one or more pieces of the statistical data used for the evaluation (in the example of FIG. 14, a plurality of pieces of the statistical data) are indicated together, and a position of the person corresponding to the retrieval result is indicated on the statistical data (the histogram). When the accepted query is the query of "a person wearing unsuitable clothing for the occasion," as illustrated in FIG. 15, clothing (average clothing of a suit or the like) corresponding to an average frequency value (the reference axis) may be configured to be indicated together.

As described above, in this arrangement, when the first query including the relative expression is accepted, the evaluation method for the persons (the retrieval targets) included in the images is determined according to the accepted first query, the determined evaluation method is used to evaluate each person, and the evaluation result is indicated. This achieves a mechanism that ensures retrieval with a query of the difference from others while providing a degree of freedom on a retrieval input.

The retrieving apparatus 20 of this arrangement at least includes a function (the query obtaining unit 214) for containing the first query that includes the relative expression, and a function (the display control unit 217) for controlling to indicate the evaluation result of the retrieval targets obtained by the evaluation method determined according to the first query, so as to be considered as an exemplary "display device."

### Second Arrangement

Next, a description will be given of a second arrangement. Descriptions on elements corresponding or identical to the above-described first arrangement will be omitted as necessary. The retrieving apparatus 20 has a basic configuration similar to the above-described first arrangement.

The query obtaining unit 214 obtains the query that includes the above-described first query and the second query including the absolute expression. Then, the evaluation method determining unit 215 analyzes the query obtained by the query obtaining unit 214, and determines a first evaluation parameter indicating statistical data corresponding to the first query and a second evaluation parameter indicating statistical data corresponding to the second query. Hereinafter, an evaluation value based on the first evaluation parameter is referred to as "a first evaluation value," and an evaluation value based on the second evaluation parameter is referred to as "a second evaluation value." Here, a way to give the evaluation value is determined such that the evaluation method determining unit 215 gives a higher first evaluation value to a retrieval target corresponding to the first evaluation parameter as a feature quantity of the retrieval target is further from a reference axis of the first evaluation parameter, and the evaluation method determining unit 215 gives a higher second evaluation value to a retrieval target corresponding to the second evaluation parameter as a feature quantity of the retrieval target is closer to a feature quantity corresponding to the second query.

The following describes more specifically. The evaluation method determining unit 215 determines the first evaluation parameter and the second evaluation parameter based on the query (the query obtained by the query obtaining unit 214) including the first query and the second query, and the above-described keyword conversion table (see FIG. 10).

For example, when a query of "a tall person wearing a blue T-shirt" is accepted, on a part of "blue T-shirt," the evaluation method determining unit 215 selects "T-shirt" for the attribution, "color" for the attribution content, "match" for the evaluation axis, and "HSV = (0.66, 1, 1)" for a set value. This means that the evaluation parameter corresponding to "blue T-shirt" is determined to the statistical data (the histogram) on the colors of the T-shirts of the respective persons included in the images, and it is determined to give a higher evaluation value as the color is closer to the set value of "HSV = (0.66, 1, 1)" (the feature quantity corresponding to "blue T-shirt"). That is, the part of "blue T-shirt" is the second query including the absolute expression, and the statistical data, determined here, on the colors of the T-shirts is the above-described second evaluation parameter. On a part of "tall person," the evaluation method determining unit 215 selects "height" for the attribution, "length" for the attribution content, and "long" for the evaluation axis. This means that the evaluation parameter corresponding to "tall person" is determined to the statistical data on the heights of the respective persons included in the images, and it is determined to give a higher evaluation value as the height is further from the reference axis of the statistical data on the heights toward the longer height (larger in height). That is, the part of "tall person" is the first query including the relative expression, and the statistical data, determined here, on the heights is the above-described first evaluation parameter.

The evaluation unit 216 determines the first evaluation value and the second evaluation value for each person included in the images, determines a final evaluation value of the retrieval target based on the first evaluation value and the second evaluation value, and determines at least a person that has a maximum final evaluation value, as the evaluation result. That is, the evaluation unit 216 performs the evaluation based on the first evaluation parameter, which is determined by the evaluation method determining unit 215, (according to the way to give the first evaluation value determined by the evaluation method determining unit 215) for each person included in the images to determine the first evaluation value, and the evaluation unit 216 performs the evaluation based on the second evaluation parameter, which is determined by the evaluation method determining unit 215, (according to the way to give the second evaluation value determined by the evaluation method determining unit 215) to determine the second evaluation value. Then, the evaluation unit 216 determines the final evaluation value based on the first evaluation value and the second evaluation value for each person. The final evaluation value may be a sum of the first evaluation value and the second evaluation value, or may be a result of an adding with weighting. Then, the evaluation unit 216 at least determines a person that has a maximum final evaluation value. For example, a configuration may be employed such that one or more persons whose final evaluation values are equal to or more than a threshold value are determined.

### Third Arrangement

Next, a description will be given of a third arrangement. Descriptions on elements corresponding or identical to the above-described arrangements will be omitted as necessary. This arrangement is different from the above-described arrangements in a point that the retrieval target is a time slot and a location. The retrieving apparatus 20 has a basic configuration similar to the above-described first arrangement.

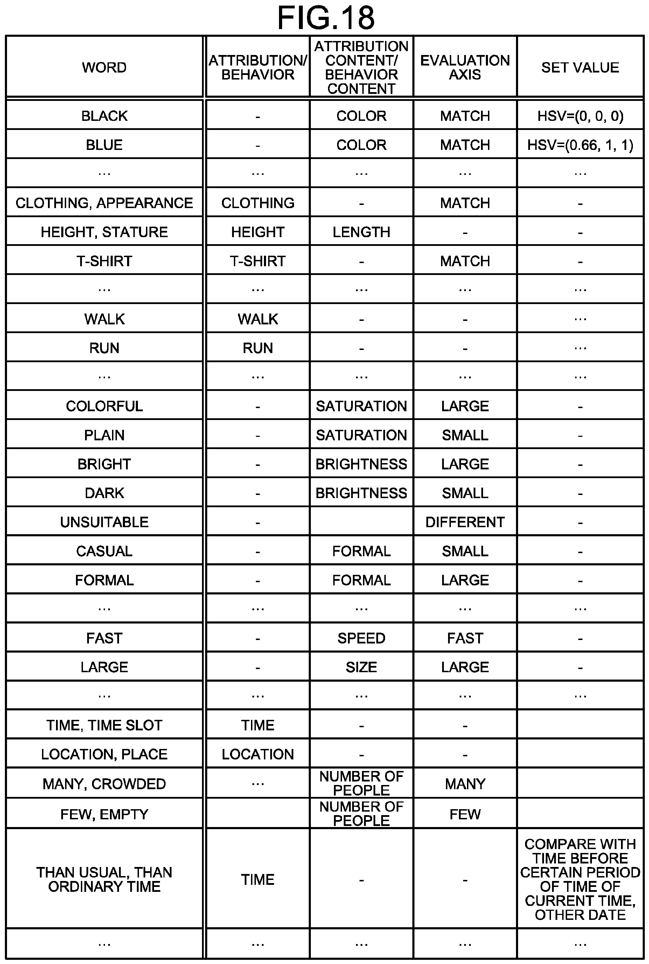

In this arrangement, the evaluation method determining unit 215 manages an attribution table illustrated in FIG. 16, an attribution/behavior content table illustrated in FIG. 17, and a keyword conversion table illustrated in FIG. 18. For the location, for example, a plurality of the cameras 10 existing in the facility can be configured to be a target for comparison, and for the time slot, for example, respective time periods separated in one hour can be configured to be a target for comparison. For example, when retrieval is performed with a query of "time slot with people increasing," the evaluation method determining unit 215 selects "time" for the attribution, "number of people" for the attribution content, and "many" for the evaluation axis. That is, the evaluation method determining unit 215 determines an evaluation parameter (statistical data) corresponding to "time slot with people increasing" to a histogram indicating the number of people (counted number of people) per time period separated in one hour, and determines to give a higher evaluation value as the time slot including more people compared with an average number of people (included in a concept to give a higher evaluation value as further from the reference axis). For counting the number of people, various known techniques are available, and for example, a technique disclosed in Non-patent Document "Pham, Viet-Quoc, et al. "COUNT Forest: CO-Voting Uncertain Number of Targets Using Random Forest for Crowd Density Estimation." Proceedings of the IEEE International Conference on Computer Vision. 2015." or the like may be employed.

For example, when retrieval is performed with a query of "location more crowded than usual," "location" for the attribution, "number of people" for the attribution content, and "many" for the evaluation axis are selected. In this example, with a partial query of "than usual," the evaluation method determining unit 215 sets a time before a certain period of time of a current time on the other date as a target for comparison. Here, the evaluation method determining unit 215 determines an evaluation parameter (statistical data) corresponding to "location more crowded than usual" to a histogram indicating the number of people per time period for each location, and determines to give a higher evaluation value to the location as the number of people corresponding to the current time (not limited to the current time, a desired time may be used) is larger compared with the number of people corresponding to the target for comparison (the reference axis). A query of "location getting stuck often" and a query of "time slot that people walk fast" can be considered similarly to the above description. The content of the output after the evaluation of the retrieval target with the evaluation method determined by the evaluation method determining unit 215 is similar to the above-described arrangements.

### Fourth Arrangement

Next, a description will be given of a fourth arrangement. Descriptions on elements corresponding or identical to the above-described arrangements will be omitted as necessary. This arrangement is different from the above-described arrangements in a point that the retrieval target is a vehicle. The retrieving apparatus 20 has a basic configuration similar to the above-described first arrangement.

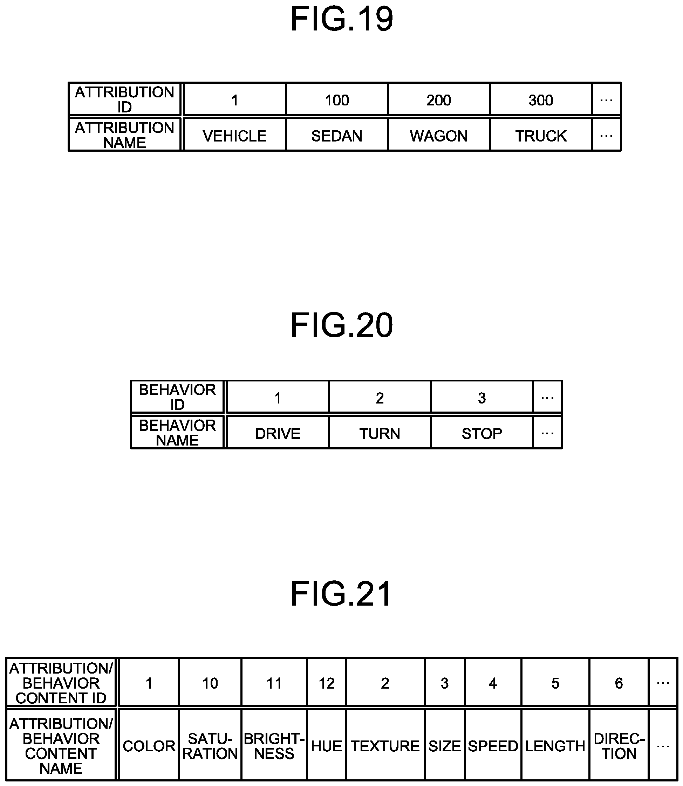

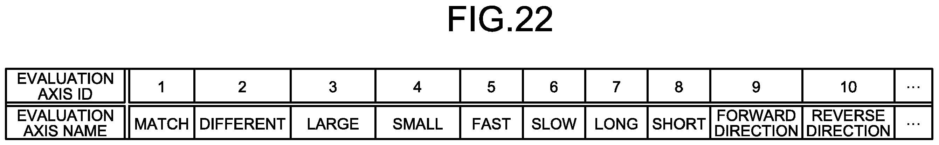

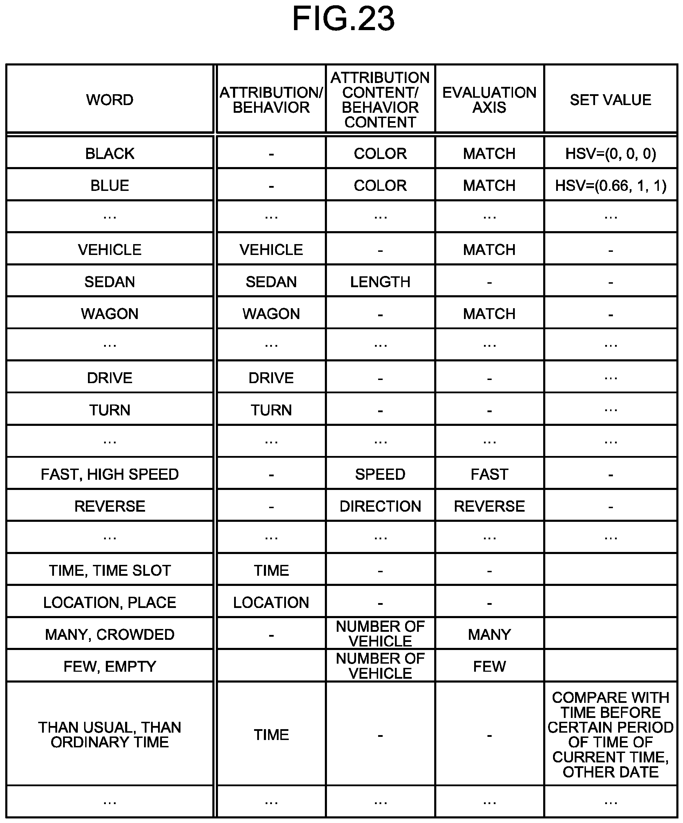

In this arrangement, the evaluation method determining unit 215 manages an attribution table illustrated in FIG. 19, a behavior table illustrated in FIG. 20, an attribution/behavior content table illustrated in FIG. 21, an evaluation axis table illustrated in FIG. 22, and a keyword conversion table illustrated in FIG. 23. For example, when retrieval is performed with a query of "vehicle driving in reverse," the evaluation method determining unit 215 selects "vehicle" for the attribution, "direction" for a behavior content name, and "reverse direction" for the evaluation axis. That is, the evaluation method determining unit 215 determines an evaluation parameter (statistical data) corresponding to "vehicle driving in reverse" to statistical data (histogram) on the directions of the vehicles, and determines to give a higher evaluation value as the vehicle has the direction more closer to the direction reverse to a reference direction. The content of the output after the evaluation of the retrieval target with the evaluation method determined by the evaluation method determining unit 215 is similar to the above-described arrangements. In this arrangement, for example, with the query of "fast vehicle" or "high speed vehicle," the vehicle driving at a speed faster than normal speed (reference speed) is retrieved, and with the query of "location in traffic jam," the location including many stopped vehicles is retrieved.

The program executed by the retrieving apparatus 20 of the above-described arrangements and modifications may be stored on a computer coupled to a network of Internet or the like, so as to be downloaded and provided via the network. The program executed by the retrieving apparatus 20 of the above-described arrangements and modifications may be provided or distributed via the network of Internet or the like. The program executed by the retrieving apparatus 20 of the above-described arrangements and modifications may be preliminarily embedded in a non-volatile memory medium of the ROM or the like so as to be provided.

Furthermore, the above-described arrangements and modifications can be arbitrarily combined.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. A retrieving apparatus includes a query obtaining unit, an evaluation method determining unit, and an evaluation unit. The query obtaining unit is configured to obtain a first query including a relative expression. The evaluation method determining unit is configured to determine an evaluation method for retrieval targets according to the first query. The evaluation unit is configured to evaluate the retrieval targets with the determined evaluation method.

Example 2. In the retrieving apparatus according to Example 1, the evaluation method determining unit determines an evaluation parameter for evaluating the retrieval targets according to the first query.

Example 3. In the retrieving apparatus according to Example 2, the evaluation parameter is statistical data on feature quantities regarding attributions or behaviors of the retrieval targets.

Example 4. In the retrieving apparatus according to Example 3, the evaluation method determining unit determines a way to give an evaluation value such that as a feature quantity of a retrieval target corresponding to the statistical data determined as the evaluation parameter is further from a reference axis of the statistical data, a higher evaluation value is given to the retrieval target.

Example 5. In the retrieving apparatus according to Example 4, the evaluation method determining unit determines the evaluation parameter and the way to give the evaluation value corresponding to the first query based on corresponding information indicating a correspondence between a word, an attribution or a behavior, and a direction in which the evaluation value increases, and the first query.

Example 6. In the retrieving apparatus according to Example 4 or 5, the evaluation unit determines an evaluation value for each retrieval target of a plurality of the retrieval targets based on a feature quantity of the retrieval target corresponding to the evaluation parameter determined and based on the evaluation parameter, and determines at least a retrieval target whose evaluation value is maximum, as an evaluation result.

Example 7. In the retrieving apparatus according to Example 3, the query obtaining unit obtains a query that includes the first query and a second query including an absolute expression. The evaluation method determining unit analyzes the query to determine a first evaluation parameter indicating statistical data corresponding to the first query, and a second evaluation parameter indicating statistical data corresponding to the second query. The evaluation unit determines a first evaluation value and a second evaluation value for each retrieval target of the retrieval targets, the first evaluation value indicating an evaluation value based on the first evaluation parameter, the second evaluation value indicating an evaluation value based on the second evaluation parameter, determines a final evaluation value of the retrieval target based on the first evaluation value and the second evaluation value, and determines at least a retrieval target that has a maximum final evaluation value, as an evaluation result.

Example 8. In the retrieving apparatus according to Example 7, the evaluation method determining unit determines a way to give an evaluation value such that as a feature quantity of a retrieval target corresponding to the first evaluation parameter is further from a reference axis of the first evaluation parameter, a higher first evaluation value is given to the retrieval target, and as a feature quantity of a retrieval target corresponding to the second evaluation parameter is close to a feature quantity corresponding to the second query, a higher second evaluation value is given to the retrieval target.

Example 9. In the retrieving apparatus according to any one of Examples 1 to 8, the retrieving apparatus further includes a display control unit configured to indicate an evaluation result by the evaluating.

Example 10. A display device includes a query obtaining unit and a display control unit. The query obtaining unit is configured to obtain a first query including a relative expression. The display control unit is configured to indicate an evaluation result on retrieval targets according to an evaluation method determined according to the first query.

Example 11. A retrieving method includes: obtaining a first query that includes a relative expression; determining an evaluation method for retrieval targets according to the first query; and evaluating the retrieval targets with the evaluation method determined at the evaluation method determining.

Example 12. In the retrieving method according to Example 11, the evaluation method determining includes determining an evaluation parameter for evaluating the retrieval targets according to the first query.

Example 13. In the retrieving method according to Example 12, the evaluation parameter is statistical data on feature quantities regarding attributions or behaviors of the retrieval targets.

Example 14. In the retrieving method according to Example 13, the evaluation method determining includes determining a way to give an evaluation value such that as a feature quantity of a retrieval target corresponding to the statistical data determined as the evaluation parameter is further from a reference axis of the statistical data, a higher evaluation value is given to the retrieval target.

Example 15. In the retrieving method according to Example 14, the evaluation method determining includes determining the evaluation parameter and the way to give the evaluation value corresponding to the first query based on corresponding information indicating a correspondence between a word, an attribution or a behavior, and a direction in which the evaluation value increases, and the first query.

Example 16. In the retrieving method according to Example 14 or 15, the evaluating includes determining an evaluation value for each retrieval target of a plurality of the retrieval targets based on a feature quantity of the retrieval target corresponding to the evaluation parameter determined at the evaluation method determining and based on the evaluation parameter, and determining at least a retrieval target whose evaluation value is maximum, as an evaluation result.

Example 17. In the retrieving method according to Example 13, the obtaining includes obtaining a query that includes the first query and a second query including an absolute expression. The evaluation method determining includes analyzing the query to determine a first evaluation parameter indicating statistical data corresponding to the first query, and a second evaluation parameter indicating statistical data corresponding to the second query. The evaluating includes determining a first evaluation value and a second evaluation value for each retrieval target of the retrieval targets, the first evaluation value indicating an evaluation value based on the first evaluation parameter, the second evaluation value indicating an evaluation value based on the second evaluation parameter, determining a final evaluation value of the retrieval target based on the first evaluation value and the second evaluation value, and determining at least a retrieval target that has a maximum final evaluation value, as an evaluation result.

Example 18. In the retrieving method according to Example 17, the evaluation method determining includes determining a way to give an evaluation value such that as a feature quantity of a retrieval target corresponding to the first evaluation parameter is further from a reference axis of the first evaluation parameter, a higher first evaluation value is given to the retrieval target, and as a feature quantity of a retrieval target corresponding to the second evaluation parameter is close to a feature quantity corresponding to the second query, a higher second evaluation value is given to the retrieval target.

Example 19. In the retrieving method according to any one of Examples 11 to 18, the retrieving method further includes indicating an evaluation result by the evaluating

## Claims

1. A retrieving apparatus (20) comprising:
a query obtaining unit (214) configured to obtain a first query including a relative expression;
an evaluation method determining unit (215) configured to determine an evaluation method for retrieval targets according to the first query; and
an evaluation unit (216) configured to evaluate the retrieval targets with the determined evaluation method.

2. The retrieving apparatus (20) according to claim 1, wherein the evaluation method determining unit (215) determines an evaluation parameter for evaluating the retrieval targets according to the first query.

3. The retrieving apparatus (20) according to claim 2, wherein the evaluation parameter is statistical data on feature quantities regarding attributions or behaviors of the retrieval targets.

4. The retrieving apparatus (20) according to claim 3, wherein the evaluation method determining unit (215) determines a way to give an evaluation value such that as a feature quantity of a retrieval target corresponding to the statistical data determined as the evaluation parameter is further from a reference axis of the statistical data, a higher evaluation value is given to the retrieval target.

5. The retrieving apparatus (20) according to claim 4, wherein the evaluation method determining unit (215) determines the evaluation parameter and the way to give the evaluation value corresponding to the first query based on corresponding information indicating a correspondence between a word, an attribution or a behavior, and a direction in which the evaluation value increases, and the first query.

6. The retrieving apparatus (20) according to claim 4 or 5, wherein the evaluation unit (216) determines an evaluation value for each retrieval target of a plurality of the retrieval targets based on a feature quantity of the retrieval target corresponding to the evaluation parameter determined and based on the evaluation parameter, and determines at least a retrieval target whose evaluation value is maximum, as an evaluation result.

7. The retrieving apparatus (20) according to any one of claims 3 to 6, wherein
the query obtaining unit (214) obtains a query that includes the first query and a second query including an absolute expression,
the evaluation method determining unit (215) analyzes the query to determine a first evaluation parameter indicating statistical data corresponding to the first query, and a second evaluation parameter indicating statistical data corresponding to the second query, and
the evaluation unit (216) determines a first evaluation value and a second evaluation value for each retrieval target of the retrieval targets, the first evaluation value indicating an evaluation value based on the first evaluation parameter, the second evaluation value indicating an evaluation value based on the second evaluation parameter, determines a final evaluation value of the retrieval target based on the first evaluation value and the second evaluation value, and determines at least a retrieval target that has a maximum final evaluation value, as an evaluation result.

8. The retrieving apparatus (20) according to claim 7, wherein the evaluation method determining unit (215) determines a way to give an evaluation value such that as a feature quantity of a retrieval target corresponding to the first evaluation parameter is further from a reference axis of the first evaluation parameter, a higher first evaluation value is given to the retrieval target, and as a feature quantity of a retrieval target corresponding to the second evaluation parameter is close to a feature quantity corresponding to the second query, a higher second evaluation value is given to the retrieval target.

9. The retrieving apparatus (20) according to any one of claims 1 to 8, further comprising a display control unit (217) configured to indicate an evaluation result by the evaluating.

10. A display device comprising:
a query obtaining unit (214) configured to obtain a first query including a relative expression; and
a display control unit (217) configured to indicate an evaluation result on retrieval targets according to an evaluation method determined according to the first query.

11. A retrieving method, comprising:
obtaining a first query that includes a relative expression;
determining an evaluation method for retrieval targets according to the first query; and
evaluating the retrieval targets with the evaluation method determined at the evaluation method determining.

12. The retrieving method according to claim 11, wherein the evaluation method determining includes determining an evaluation parameter for evaluating the retrieval targets according to the first query.

13. The retrieving method according to claim 12, wherein the evaluation parameter is statistical data on feature quantities regarding attributions or behaviors of the retrieval targets.

14. The retrieving method according to claim 13, wherein the evaluation method determining includes determining a way to give an evaluation value such that as a feature quantity of a retrieval target corresponding to the statistical data determined as the evaluation parameter is further from a reference axis of the statistical data, a higher evaluation value is given to the retrieval target.

15. The retrieving method according to claim 14, wherein the evaluation method determining includes determining the evaluation parameter and the way to give the evaluation value corresponding to the first query based on corresponding information indicating a correspondence between a word, an attribution or a behavior, and a direction in which the evaluation value increases, and the first query.
